## Europäisches Patentamt

## European Patent Office

## Office européen des brevets

(19)

(11) Veröffentlichungsnummer: **0 302 508**
**B1**

(12)

# EUROPÄISCHE PATENTSCHRIFT

(45) Veröffentlichungstag der Patentschrift:
24.10.90

(51) Int. Cl.⁵: **B63G 8/12**, F02C 7/20,
F02C 3/34, F02C 7/24

(21) Anmeldenummer: 88112753.4

(22) Anmeldetag: 05.08.88

(54) Energieversorgungsanlage.

(30) Priorität: 06.08.87 DE 3726104

(43) Veröffentlichungstag der Anmeldung:
08.02.89 Patentblatt 89/6

(45) Bekanntmachung des Hinweises auf die Patenterteilung:
24.10.90 Patentblatt 90/43

(84) Benannte Vertragsstaaten:
DE FR GB IT NL SE

(56) Entgegenhaltungen:
DE-C- 807 573
GB-A- 339 211
GB-A- 746 702
GB-A- 1 125 509
GB-A- 1 150 147
US-A- 2 511 854
US-A- 4 313 524

(73) Patentinhaber: MTU MOTOREN- UND TURBINEN-UNION
MÜNCHEN GMBH, Dachauer
Strasse 665 Postfach 50 06 40, D-8000 München 50(DE)

(72) Erfinder: Rohra, Alois, Bacherstrasse 45,
D-8000 München 90(DE)
Erfinder: Albers, Martin, Dr., Borinskistrasse 2a,
D-8000 München 60(DE)
Erfinder: Weist, Günther, Lerchenweg 4c,
D-8138 Andechs(DE)
Erfinder: Grieb, Hubert, Dr.-Ing., Nimrodstrasse 38,
D-8034 Germering(DE)
Erfinder: Moddemann, Horst, Im Alefoldchen 1,
D-5340 Bad Honnef 6(DE)

ACTORUM AG

## Beschreibung

Die Erfindung betrifft eine Energieversorgungsanlage mit einer generatorgekoppelten Gasturbine, die im quasi-geschlossenen Kreislauf betreibbar ist, wobei Arbeitsgasaustritt aus der Gasturbine über einen Heißgaswärmetauscher und einen von Kühlmittel durchflossenen Vorkühler erneut in die Gasturbine leitbar ist. Beispielsweise aus der US-PS 3 736 745 ist eine gattungsgemäße Energieversorgungsanlage bekannt, die beispielsweise zum Antrieb eines Unterseebootes verwendet werden kann.

Es ist Aufgabe der vorliegenden Erfindung, eine derartige Anlage hinsichtlich Schallemissionen zu verbessern, um die Schallortung eines derart ausgerüsteten Unterseebootes zu erschweren.

Erfindungsgemäß wird die Aufgabe durch die im Kennzeichnungsteil des Patentanspruchs 1 angegebenen Merkmale gelöst.

Die erfindungsgemäße Unterbringung der wärmetauschenden Vorrichtungen in einem Druckbehälter ermöglicht zunächst vorteilhafterweise eine effektive Eingrenzung des in diesen Elementen entstehenden Lärmes. Die Hauptschallemission entsteht indes in der Gasturbine, und die erfindungsgemäße Anordnung der Gasturbine gegenüberliegend zu den Verbindungsgliedern mit dem Fundament verlängert die Schallwege und trägt somit vorteilhafterweise zu einer hohen Eigendämpfung bei.

In alternativen Ausführungsformen der Erfindung kann entweder das Gasturbinen-Druckbehälter-Gebilde aus einem Fundament stehen oder unterhalb eines Fundaments aufgehängt sein.

Eine weitere vorteilhafte Schallentkoppelung ist dadurch erzielbar, daß ein Zwischenfundament vorgesehen ist, das über weitere schalldämmende Verbindungsglieder an einem Hauptfundament angebracht ist. Hierdurch wird eine weitere Verminderung des aus das Hauptfundament übertragenen Schalles erzielt. Das Zwischenfundament weist vorteilhafterweise eine erhebliche Masse auf, wobei Dämpfungsfaktoren, Massen sowie Elastizitäten des Verbindungsglieder-Zwischenfundamentgebildes auf die in der Gasturbine bzw. im Druckbehälter auftretenden Resonanzfrequenzen abgestimmt ist.

In weiterer vorteilhafter Ausbildung der Erfindung ist der Druckbehälter an der Außenseite mit einer schalldämmenden Schicht versehen, die aus zäher, plastisch verformbarer Masse besteht. Insbesondere eignet sich hierfür ein hochpolymerer Werkstoff. Dadurch wird weiterhin der innerhalb des Druckbehälters entstehende Lärm, der durch Strömungsschall bzw. Bedingungen der Wärmetauscherelemente hervorgerufen sein kann, weiter vermindert.

Eine weitere vorteilhafte Ausbildung der Erfindung besteht darin, daß die Energieversorgungsanlage von einer Schallkapsel umgeben ist, die vorteilhafterweise eine weitere Reduzierung des nach außen dringenden Lärmes bewirkt. Die Schallkapsel besteht aus einem gedämpften Rahmen, der elastisch auf dem Zwischenfundament befestigt ist. Die offenen Felder dieses Rahmens werden durch die montierbaren Platten geschlossen, die in schalldämpfender Verbundbauweise hergestellt und auf ihrer Innenseite mit schallschluckendem Material verkleidet sind. Der Rahmen ist in vorzugsweise in Verbindung steifer Stahlblechbauweise ausgeführt. Seine Auflagepunkte und Befestigungen befinden sich direkt im Polymerbeton, was schalltechnisch eine Entkoppelung des Stahlrahmens vom Zwischenfundament bedeutet. Die Platten sind paneelenartig ausgeführt, und weisen von außen nach innen folgenden Aufbau auf:
- Eine Blechwand, auf deren Innenseite
- eine Absorptionsschicht aus zäh-elastischem, hochpolymerem Werkstoff,
beispielsweise V608D der Firma Stankiewic angebracht ist,
- eine Mineralwollage vorgesehen ist, die durch ein
- Lochblech mit bestimmtem Lochverhältnis gestützt ist.

Vorteilhafterweise ist die Gasturbine elastisch mit dem Druckbehälter verbunden, was ebenfalls zu einer weiteren Schallreduzierung beiträgt.

Eine weitere Ausbildung der Erfindung sieht vor, daß der Heißgaswärmetauscher mittels U-förmig gekrümmter Röhrchen als Kreuz-Gegenströmer ausgeführt ist. Dies ermöglicht eine günstige Einbauweise innerhalb des zylindrisch ausgebildeten Druckbehälters. Diese Anordnung ermöglicht ferner eine kompakte Ausführung des vorzugsweise zylindrischen Druckbehälters, wodurch ohne größere Versteifungsstreben die Massenkräfte der relativ schweren Gasturbine über die Druckbehälterwandung auf die Verbindungsgelieder mit dem Fundament übertragen werden können.

Vorteilhafterweise ist ein Sauerstoffvorwärmer vorgesehen, der strömungsmäßig parallel zum Heißgaswärmetauscher angeordnet ist und im Druckbehälter neben diesem angebracht ist. Hierdurch läßt sich eine strömungsmäßen günstige Anordnung erreichen, was zu geringen Schallemissionen führt.

Der Druckbehälter ist vorteilhafterweise zylindrisch ausgebildet, und ein Gasströmungskanal in Zylinderlängsrichtung ausgerichtet, wobei Zu- und Abflußkanäle an zwei axial versetzten Stellen des der Gasturbine zugewandten Druckbehälterumfangs vorgesehen sind. Die in etwa U-förmige Ausbildung des Gasströmungskanalverlaufes ermöglicht eine günstige Anordnung der wärmetauschenden Elemente, und dadurch eine kompakte Bauweise. Die kompakte Bauweise sowie die zylindrische Ausbildung des Druckbehälters ermöglicht geringe Außenmaße der gesamten Anordnung.

Die Erfindung wird nachfolgen anhand der beigefügten Zeichnungen näher erläutert. Dabei zeigt:

Fig. 1: eine teilgeschnittene Seitenansicht der Energieversorgungsanlage,
Fig. 2: eine teilgeschnittene Frontalansicht der Energieversorgungsanlange.

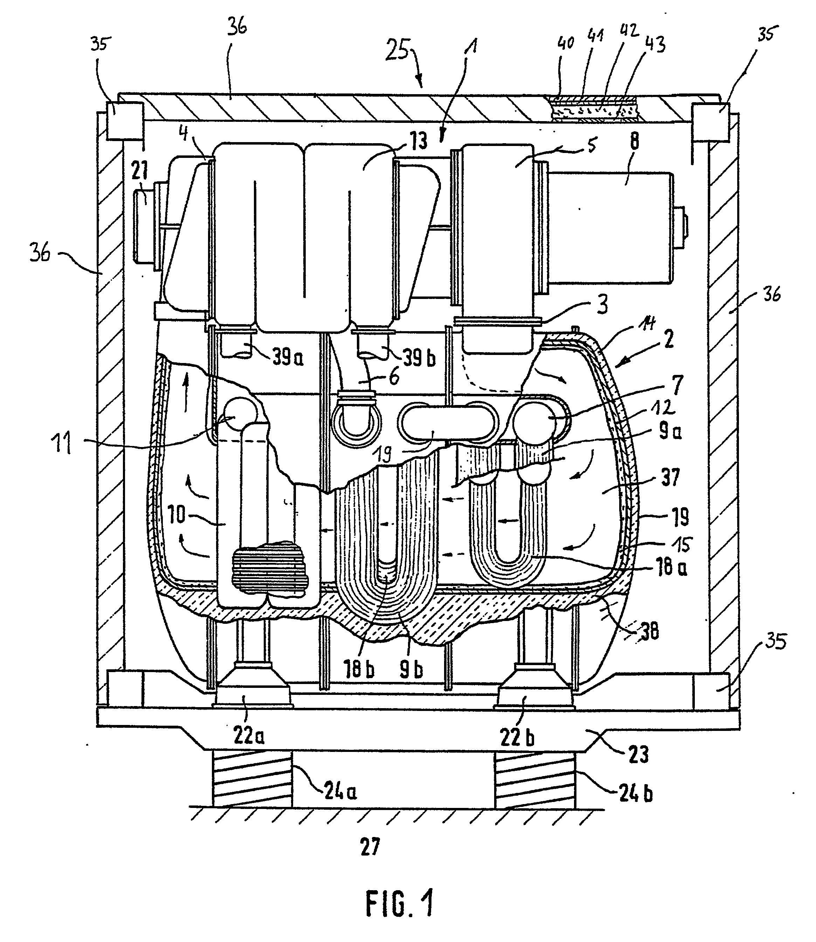

In Figur 1 ist eine Gasturbine 1 gezeigt, die an einem etwa zylindrischen Druckbehälter 2 mittels vorzugsweise elastischer Fixiermittel 3 befestigt ist. Der Druckbehälter 2 ist über Verbindungsglieder 22a und 22b mit einem Zwischenfundament 23 verbunden. Das Zwischenfundament 23 wiederum steht über Verbindungsglieder 24a und 24b mit einem Hauptfundament 27, beispielsweise mit den Verstrebungen eines Unterseebootes in Verbindung. Gasturbine 1 und Druckbehälter 2 sind von einer Schallkapsel 25 umgeben, die gasdicht und schwingungsgedämpft am Zwischenfundament 23 befestigt ist. Die Schallkapsel 25 besteht aus einem Rahmen 35, der am Zwischenfundament 23 angebracht ist. Am Rahmen 35 sind eine Anzahl Platten 36 angebracht, die paneelenartig aufgebaut sind. Die Platten 36 bestehen dabei von außen nach innen aus einem Blech 40, einer Absorptionsschicht 41, einer Mineralwollage 42 und einem Lochblech 43.

Die Gasturbine 1 ist mit einem Generator 8 zur Erzeugung von elektrischem Strom verbunden. Ferner weist sie an ihrem entgegengesetzten axialen Ende einen Anlassermotor 21 auf. Im Bereich der Verdichter 4 ist ein Zwischenkühler 13 vorgesehen, der mit einem externen Kühlwasserkreislauf gekoppelt ist und den Gasstrom zwischen zwei Verdichterstufen zwischenkühlt. Ein Sammelgehäuse 5 im Turbinenaustrittsbereich steht mit einem Strömungskanal 37 im Inneren des Druckbehälters 2 in Verbindung. Im axial gestreckten Bereich des Strömungskanales 37 sind hintereinander ein Heißgaswärmetauscher 9 und Vorkühler 10 angeordnet. Der Heißgaswärmetauscher 9 ist zweiteilig ausgeführt, 9a, 9b, wobei beide Teilelemente aus U-förmig gekrümmten Rohrbündeln bestehen. Die Zuleitung zum Heißgaswärmetauscher 9 erfolgt vom Verdichter 4 über die Zuleitung 6, die Ableitung des erhitzten Gases zur Brennkammer über das Ableitungsrohr 7, so daß der Heißgaswärmetauscher 9 im Kreuz-Gegenstrom betrieben wird. Der stromab des Heißgaswärmetauschers 9 angeordnete Vorkühler 10 ist mit einem externen Kühlwasserkreislauf verbunden und ebenfalls im Kreuz-Gegenstrom betreiben, wobei die Zuflußleitung 11 angedeutet ist. Strömungsmäßig parallel zum Heißgaswärmetauscher 9 ist ein Sauerstoffvorwärmer 18, der aus einem Kryogentank entnommenes verdampftes $O_2$ vor Einspritzung in die Kammer vorwärmt.

Der Druckbehälter 2 besteht aus einem vorzugsweise metallischen Mantel, auf dessen Außenseite eine Absorptionsschicht 14 angebracht ist, die aus einer zähen, plastisch verformbaren Masse besteht. Auf der Innenseite des Mantels 12 ist eine Schicht 15 zur Wärmedämmung angebracht.

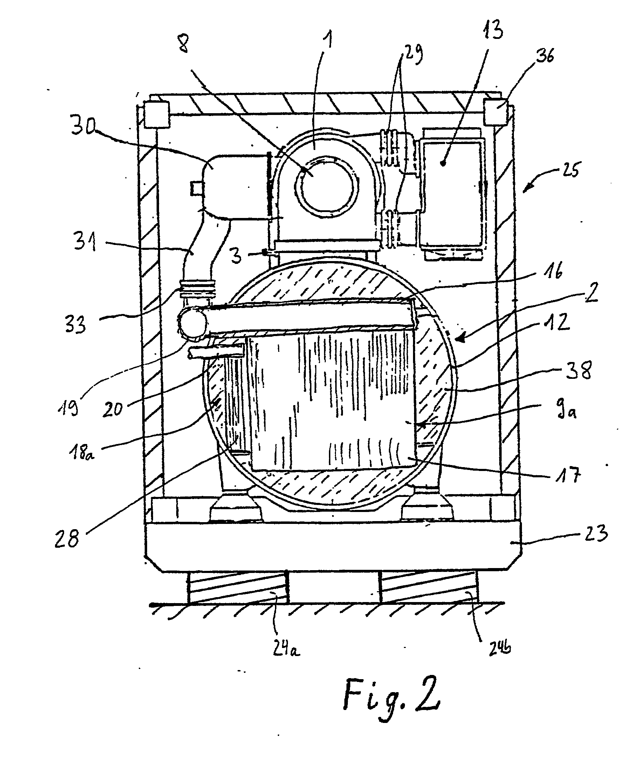

Bei der in Figur 2 gezeigten Ansicht der Energieversorgungsanlage ist der Druckbehälter 2 in Höhe des Raumes zwischen den beiden Gaswärmetauscherelementen 9a und 9b geschnitten. Das Heißgaswärmetauscherelement 9a weist zwei Sammelrohre 16 auf, die mit einer Anzahl von Profilröhrchen 17 in Verbindung stehen. Eines der Sammelrohre 16 ist mittels eines Verbindungsstutzens 19 mit einen der Sammelrohre des anderen Heißgaswärmetauscherelementes 9b verbunden (Figur 1).

Neben dem Heißgaswärmetauscherelement 9a ist ein Sauerstoffvorwärmerelement 18a angeordnet, daß ebenfalls zwei Sammelrohre 20 und Profilröhrchen aufweist. Der weitere Anschluß der Sammelrohre 20 mit der Sauerstoffversorgungseinrichtung ist nicht mehr dargestellt. Der Querschnitt des Strömungskanales 37 entspricht etwa der von den profilröhrchen 17 überstrichenen Fläche, und ist somit rechteckig. Zwischen dem Strömungskanal 37 und dem Mantel 12 des Druckbehälters 2 sind Hohlräume vorgesehen, die ebenfalls durch Dämmaterial 15 zum Zwecke der Wärmedämmung gefüllt sind.

Oberhalb des Druckbehälters 2 ist die Gasturbine 1 angeordnet, die über elastische Fixiermittel 3 am Druckbehälter 2 angebracht ist. Auf der einen Seite der Gasturbine 1 ist der oben erläuterte Zwischenkühler 13 über elastische Verbindungsstutzen 29 mit dieser verbunden. Auf der anderen Seite der Gasturbine 1 ist eine Brennkammer 30 vorgesehen, die mittels einer Rohrleitung 31 mit dem Heißgaswärmetauscher 9 in Verbindung steht.

**Patentansprüche**

1. Energieversorgungsanlage mit einer generatorgekoppelten Gasturbine, die im quasi-geschlossenen Kreislauf betreibbar ist, wobei Arbeitsgas nach Austritt aus der Gasturbine über einen Heißgaswärmetauscher und eine von Kühlmittel durchflossenen Vorkühler erneut in die Gasturbine leitbar ist, dadurch gekennzeichnet, daß der Heißgaswärmetauscher (9) und der Vorkühler (10) hintereinander in einem vom Arbeitsgas durchströmten Druckbehälter (2) untergebracht sind, und der Druckbehälter (2) mittels schalldämmender Verbindungsglieder (22) an einem Fundament (23) befestigt ist, und die Gasturbine (1) am Druckbehälter (2) angebracht ist, wobei sich die Verbindungsglieder (22) und die Gasturbine (1) bezüglich des Druckbehälters (2) gegenüberliegen.

2. Energieversorgungsanlage nach Anspruch 1, dadurch gekennzeichnet, daß der Druckbehälter (2) oberhalb des Fundaments (23) steht und die Gasturbine (1) oberhalb des Druckbehälters (2) angebracht ist.

3. Energieversorgungsanlage nach Anspruch 1, dadurch gekennzeichnet, daß der Druckbehälter (2) unterhalb des Fundments (23) hängt, und die Gasturbine (1) unterhalb des Druckbehälters (2) angebracht ist.

4. Energieversorgungsanlage nach einem der vorhergehenden Ansprüche, dadurch gekennzeichnet, daß das Fundament (23) ein Zwischenfundament ist und über weitere schalldämmende Verbindungsglieder (24) an einem Hauptfundament (27) angebracht ist.

5. Energieversorgungsanlage nach einem der vorhergehenden Ansprüche, dadurch gekennzeichnet, daß der Druckbehälter (2) auf seiner Außenseite mit einer schalldämmenden Schicht versehen ist, die aus zäher, plastisch verformbarer Masse, insbesondere aus hochpolymeren Werkstoffen besteht.

6. Energieversorgungsanlage nach einem der vorhergehenden Ansprüche, dadurch gekennzeichet, daß sie von einer Schallkapsel (25) umgeben ist, die einen am Zwischenfundament befestigten Rahmen (35) umfaßt, an dem schallschluckende Platten (36) angebracht sind.

7. Energieversorgungsanlage nach Anspruch 6, dadurch gekennzeichnet, daß der Rahmen (35) eine Blechkonstruktion ist, die im Zwischenfundament (23) eingegossen ist.

8. Energieversorgungsanlage nach Anspruch 6, dadurch gekennzeichnet, daß die Platten (36) von außen nach innen aus einem tragenden Blech (40) aufgebaut ist, auf dem eine zäh-elastische hochpolymere Absorptionsschicht (41) angebracht ist, aus einer Lage Mineralwolle (42), und einem Lochblech (43).

9. Energieversorgungsanlage nach einem der vohergehenden Ansprüche, dadurch gekennzeichnet, daß die Gasturbine (1) elastisch mit dem Druckbehälter (2) verbunden ist.

10. Energieversorgungsanlage nach einem der vorhergehenden Ansprüche, dadurch gekennzeichnet, daß der Heißgaswärmetauscher (9) mittels U-förmig gekrümmter Röhrchen als Kreuz-Gegenströmer ausgeführt ist.

11. Energieversorgungsanlage nach einem der vorhergenden Ansprüche, dadurch gekennzeichnet, daß ein Sauerstoffvorwärmer (18) vorgesehen ist, der strömungsmäßig parallel zum Heißgaswärmetauscher (9) angeordnet ist und im Druckbehälter (2) neben diesem angebracht ist.

12. Energieversorgungsanlage nach einem der vorhergehenden Ansprüche, dadurch gekennzeichnet, daß der Druckbehälter (2) zylindrisch ausgebildet ist, und eine Gasströmungskanal (37) in Zylinderlängsrichtung ausgerichtet ist, wobei Zu- und Abflußkanäle an zwei axial versetzten Stellen des der Gasturbine zugewandten Druckbehälterumfangs vorgesehen ist.

## Revendications

1. Centrale d'énergie comportant un générateur couplé à une turbine à gaz fonctionnant comme un circuit quasiment fermé, le gaz sortant de la turbine à gaz passant sur un échangeur de chaleur de gaz chauds et un pré-radiateur traversé par un agent de refroidissement pour être envoyé de nouveau dans la turbine à gaz, centrale caractérisée en ce que l'échangeur de chaleur pour gaz chauds (9) et le préradiateur (10) sont placés l'un derrière l'autre dans un réservoir sous pression (2) traversé par le gaz et le réservoir sous pression (2) est fixé à une fondation (23) par l'intermédiaire d'un organe de liaison (22) assurant l'isolation phonique et la turbine à gaz (1) est prévue sur le réservoir sous pression (2), les éléments de liaison (22) et la turbine à gaz (1) étant prévus de part et d'autre du réservoir sous pression (2).

2. Centrale d'énergie selon la revendication 1, caractérisée en ce que le réservoir sous pression (2) est disposé au-dessus de la fondation (23) et la turbine à gaz (1) est prévue au-dessus du réservoir sous pression (2).

3. Centrale d'énergie selon la revendication 1, caractérisée en ce que le réservoir sous pression (2) est accroché sous la fondation (23) et la turbine à gaz (1) est prévue en-dessous du réservoir sous pression (2).

4. Centrale d'énergie selon l'une des revendications précédentes, caractérisée en ce que la fondation (23) est une fondation intermédiaire ellemême reliée par l'intermédiaire d'autres organes de liaison d'isolation phonique (24) à une fondation principale (27).

5. Centrale d'énergie selon l'une des revendications précédentes, caractérisée en ce que le réservoir sous pression (2) est muni sur sa face extérieure, d'une couche d'isolation phonique qui est constituée par une masse résistante, déformable plastiquement, notamment en des hauts polymères.

6. Centrale d'énergie selon l'une des revendications précédentes, caractérisée en ce qu'elle est entourée d'une capsule phonique (25) qui comprend un châssis (35) fixé sur une fondation intermédiaire, châssis comportant des plaques (36) absorbant le bruit.

7. Centrale d'énergie selon la revendication 6, caractérisée en ce que le châssis (35) est une construction en tôle qui est coulée dans la fondation intermédiaire.

8. Centrale d'énergie selon la revendication 6, caractérisée en ce que les plaques (36) sont constituées de l'intérieur vers l'extérieur, d'une tôle porteuse (40) sur laquelle est fixée une couche d'absorption (41) de hauts polymères élastiques, résistants, et d'une couche de laine de roche (42) ainsi que d'une tôle perforée (43).

9. Centrale d'énergie selon l'une des revendications précédentes, caractérisée en ce que la turbine à gaz (1) est reliée élastiquement au réservoir sous pression (2).)

10. Centrale d'énergie selon l'une des revendications précédentes, caractérisée en ce que l'échangeur de chaleur pour gaz chauds (9) est réalisé sous la forme d'un échangeur à contre courant croisé par des petits tubes coudés en forme de U.

11. Centrale d'énergie selon l'une des revendications précédentes, caractérisée par un préchauffeur d'oxygène (18) qui est en parallèle sur le plan de l'écoulement à l'échangeur de chaleur pour gaz chauds (9) et est prévu à côté de cet échangeur dans le réservoir sous pression (2).

12. Centrale d'énergie selon l'une des revendications précédentes, caractérisée en ce que le réservoir sous pression (2) est de forme cylindrique et un canal d'écoulement de gaz (37) est aligné dans la direction longitudinale du cylindre, les canaux d'alimentation et d'évacuation étant prévus en deux emplacements axialement décalés de la périphérie du réservoir sous pression, du côté de la turbine à gaz.

## Claims

1. Power supply installation with a generator-coupled gas turbine which can be operated in a quasi-closed cycle, wherein working gas after leaving the gas turbine can be redirected into the gas turbine via a hot gas heat exchanger and a precooler through which coolant flows, characterised in that the hot gas heat exchanger (9) and the precooler (10) are accommodated one behind the other in a pressure vessel (2) through which the working gas flows, and the pressure vessel (2) is fixed by means of acoustically insulating connectors (22) to a foundation (23), and the gas turbine (1) is mounted on the pressure vessel (2), the connectors (22) and the gas turbine (1) being situated opposite one another with respect to the pressure vessel (2).

2. Power supply installation according to claim 1, characterised in that the pressure vessel (2) is situated above the foundation (23) and the gas turbine (1) is mounted above the pressure vessel (2).

3. Power supply installation according to claim 1, characterised in that the pressure vessel (2) is suspended beneath the foundation (23) and the gas turbine (1) is mounted beneath the pressure vessel (2).

4. Power supply installation according to one of the preceding claims, characterised in that the foundation (23) is an intermediate foundation and is mounted on a main foundation (27) by the agency of additional acoustically insulating connectors (24).

5. Power supply installation according to one of the preceding claims, characterised in that the pressure vessel (2) is provided on its outer face with an acoustically insulating layer consisting of a tough, plastically deformable compound, more particularly of high-polymer materials.

6. Power supply installation according to one of the preceding claims, characterised in that it is surrounded by an acoustic capsule (25) which encloses a frame (35) on which sound-absorbent plates (36) are mounted.

7. Power supply installation according to claim 6, characterised in that the frame (35) is a sheet metal construction which is cast in the intermediate foundation (23).

8. Power supply installation according to claim 6, characterised in that the plates (36) are constructed, from the outside inwards, from a load-bearing metal sheet (40) on which a viscoplastic high-polymer absorption layer (41) is mounted, from a layer of mineral wool (42), and a perforated plate (43).

9. Power supply installation according to one of the preceding claims, characterised in that the gas turbine (1) is flexibly connected to the pressure vessel (2).

10. Power supply installation according to one of the preceding claims, characterised in that the hot gas heat exchanger (9) is configured as a crosswise counterflow-type unit by means of tubes bent into a U shape.

11. Power supply installation according to one of the preceding claims, characterised in that an oxygen preheater (18) is provided which is arranged parallel to the hot gas heat exchanger (9) in relation to the direction of flow and is mounted in the pressure vessel (2) alongside the, latter.

12. Power supply installation according to one of the preceding claims, characterised in that the pressure vessel (2) is cylindrical, and a gas flow passage (37) is orientated in the cylinder's longitudinal direction, with inflow and outflow passages provided at two axially offset points on the pressure vessel periphery nearest the gas turbine.

**FIG. 1**

Fig. 2